(19) Europäisches Patentamt
European Patent Office
Office européen des brevets

(11) Veröffentlichungsnummer: **0 244 747**
**B1**

(12) # EUROPÄISCHE PATENTSCHRIFT

(45) Veröffentlichungstag der Patentschrift: **30.05.90**

(51) Int. Cl.⁵: **C07F 9/36**

(21) Anmeldenummer: **87106211.3**

(22) Anmeldetag: **29.04.87**

(54) **Ethylenisch ungesättigte Phosphinsäure- oder Thiophosphinsäureisocyanate bzw. -isothiocyanate und Verfahren zu ihrer Herstellung.**

(30) Priorität: **09.05.86 DE 3615614**

(43) Veröffentlichungstag der Anmeldung: **11.11.87 Patentblatt 87/46**

(45) Bekanntmachung des Hinweises auf die Patenterteilung: **30.05.90 Patentblatt 90/22**

(84) Benannte Vertragsstaaten: **DE FR GB**

(56) Entgegenhaltungen: **DE-A-1 921 461**

(73) Patentinhaber: **HOECHST AKTIENGESELLSCHAFT, Postfach 80 03 20, D-6230 Frankfurt am Main 80(DE)**

(72) Erfinder: **Gerdau, Thomas, Dr., Taunusstrasse 1a, D-6239 Eppstein(DE)**
Erfinder: **Kleiner, Hans-Jerg, Dr., Altkönigstrasse 11a, D-6242 Kronberg 2(DE)**
Erfinder: **Pawlowski, Georg, Dr., Blücherstrasse 48a, D-6200 Wiesbaden(DE)**

**EP 0 244 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ethylenisch ungesättigte Phosphinsäure- oder Thiophosphinsäureisocyanate bzw. -isothiocyanate sowie ein Verfahren zu ihrer Herstellung.

Die erfindungsgemäßen Verbindungen finden Anwendung als Ausgangsprodukte für die Herstellung von photovernetzbaren Polymeren, die beispielsweise zur Herstellung von Flachdruckformen oder Photoresists geeignet sind.

In der DE-A 20 53 363 werden Bindemittel beschrieben, die durch Umsetzung von hydroxyl- oder aminogruppenhaltigen Polymeren mit mindestens einem gesättigten Alkyl-, Alkyloxy-, Aryl- oder Aryloxysulfonylisocyanat entstehen. Die Bindemittel - z. B. Alkylsulfonylurethanharze - sind aber in Verbindung mit Diazoniumsalz-Polykondensationsprodukten oder photopolymerisierbaren Verbindungen nur dann im wäßrig-alkalischen Milieu entwickelbar, wenn sie relativ hohe Säurezahlen aufweisen, wodurch die Abriebfestigkeit der gehärteten Schicht verschlechtert wird.

In den DE-A 20 53 364 und 30 36 077 werden lichtempfindliche Gemische beschrieben, die als Bindemittel Umsetzungsprodukte aus einem hydroxylgruppenhaltigen Polymeren und Alkenylsulfonylisocyanaten enthalten. Die Gemische zeigen aber eine unzureichende Farbannahme, so daß beim Druckbeginn eine unvertretbar hohe Anzahl von Fehldrucken entsteht. Zudem sind die für die Darstellung dieser Bindemittel benötigten Alkenylsulfonylisocyanate nur sehr aufwendig und kostspielig herzustellen, wie z. B. aus der DE-C 12 97 601 hervorgeht.

Die Aufgabe der Erfindung war es daher, Ausgangsstoffe für die Herstellung von lichtvernetzbaren Polymeren bereitzustellen, die in wäßrig-alkalischen Lösungen löslich sind, eine bessere Oleophilie aufweisen und leichter zugänglich sind als die vorstehend genannten Polymeren.

In der DE-A 1 921 461 werden Organophosphorverbindungen der Formel

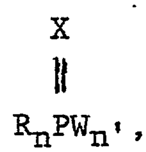

beschrieben, worin R einen Kohlenwasserstoffrest, X Sauerstoff oder Schwefel, W CN, NCO oder NCS und n und n' jeweils 1 oder 2 bedeuten, wobei $n + n' \leq 3$ ist. Die Verbindungen werden als Zwischenprodukte für die Herstellung von Pestiziden und von Zusätzen für Synthesefasern, Elastomeren, Klebstoffen und Schaumstoffen beschrieben, die diese Produkte flammbeständig machen.

Überraschenderweise wurde nun gefunden, daß ethylenisch ungesättigte (Thio)phosphinsäureisocyanate bzw. -isothiocyanate der im folgenden angegebenen Formel I die zuvor erläuterten Aufgaben in herausragender Weise erfüllen. Die Bindemittel, die aus diesen neuen, erfindungsgemäßen Verbindungen hergestellt werden können, sind Kondensationsprodukte aus den erfindungsgemäßen Verbindungen und hydroxyl- oder aminogruppenhaltigen Polymeren.

Sie weisen als funktionelle Einheiten in der Seitenkette ethylenisch ungesättigte (Thio)phosphinylurethan- oder -thiourethan- bzw. -harnstoff- oder -thioharnstoff-gruppierungen auf. Die Anwendung dieser Verbindungen wird in der gleichzeitig eingereichten Europäischen Patentanmeldung 87 106 213.9, veröffentlicht als EP-A 244 749, beschrieben.

Erfindungsgemäß werden Verbindungen der allgemeinen Formel I

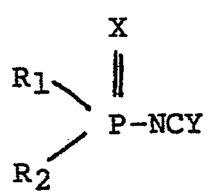

(I)

vorgeschlagen, worin

X und Y gleich oder verschieden sind und Sauerstoff oder Schwefel bedeuten,

$R_1$ ein ethylenisch ungesättigter aliphatischer Rest mit 2 bis 6, insbesondere 2 bis 4, besonders bevorzugt aber 2 bis 3 C-Atomen, z. B. ein Vinyl-, Allyl-, Methallyl- oder Crotylrest und

$R_2$ ein gesättigter aliphatischer Rest mit 1 bis 6, vorzugsweise 1 bis 2 C-Atomen oder ein ggf. substituierter Arylrest mit 6 bis 10 C-Atomen, insbesondere ein ggf. substituierter Phenylrest

ist.

Als Substituenten kommen in Frage: Halogen, z. B. Fluor, Chlor oder Brom; Alkyl, Alkoxy mit 1 bis 6 C-Atomen und Aryl oder Aryloxy mit 6 bis 10 C-Atomen.

Als bevorzugte ungesättigte (Thio)phosphinsäureiso(thio)cyanate werden genannt:

Allylmethylphosphinsäureisocyanat,
Allylmethylthiophosphinsäureisocyanat,
Allylmethylphosphinsäureisothiocyanat,
Allylmethylthiophosphinsäureisothiocyanat,
Crotylmethylphosphinsäureisocyanat,
β-Methallylmethylphosphinsäureisocyanat,
β-Methallylmethylphosphinsäureisothiocyanat,
Methylvinylphosphinsäureisocyanat,
Methylvinylthiophosphinsäureisocyanat,
Methylvinylphosphinsäureisothiocyanat,
Methylvinylthiophosphinsäureisothiocyanat
Ethylvinylphosphinsäureisocyanat,
Butylvinylphosphinsäureisocyanat,
Phenylvinylphosphinsäureisocyanat,
Phenylvinylthiophosphinsäureisocyanat,
Phenylvinylphosphinsäureisothiocyanat,
Phenylvinylthiophosphinsäureisothiocyanat.

Die genannten (Thio)phosphinsäurederivate lassen sich in guten Ausbeuten aus den entsprechenden (Thio)phosphinsäurechloriden der allgemeinen Formel II

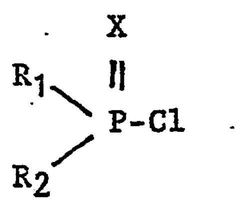

(II)

worin
$R_1$, $R_2$ und X die oben angegebenen Bedeutungen haben, durch Umsetzung mit anorganischen Cyanaten bzw. Thiocyanaten herstellen.

Als anorganische Cyanate bzw. Thiocyanate sind die Alkali- und Erdalkalisalze, insbesondere die Na-, K- und Li-salze, aber auch die Ammoniumsalze besonders geeignet.

Das Molverhältnis der (Thio)phosphinsäurechloride der Formel II zu den anorganischen Cyanat- bzw. Thiocyanatsalzen liegt vorzugsweise um 1.

Als Reaktionsmedium sind aprotische, indifferente Lösungsmittel geeignet. Zu diesen zählen z. B. Acetonitril, aromatische Kohlenwasserstoffe und chlorierte Kohlenwasserstoffe. Vorzugsweise werden Benzol oder Toluol, insbesondere aber Acetonitril angewendet.

Das Reaktionsgemisch wird unter Feuchtigkeitsausschluß bei Temperaturen von 10 - 100°C, vorzugsweise bei 20 - 60°C, solange gerührt, bis kein Produkt mehr gebildet wird. Je nach eingesetztem Ausgangsprodukt kann dies 4 Stunden, aber auch bis zu 3 Tage in Anspruch nehmen.

Die (Thio)phosphinsäurechloride der Formel II sind teils bekannte Verbindungen, teils nach bekannten Verfahren zugänglich. Methyl-vinyl- bzw. Phenyl-vinyl-phosphinsäurechloride können entsprechend der DE-C 23 57 678 gemäß folgendem Reaktionsschema hergestellt werden:

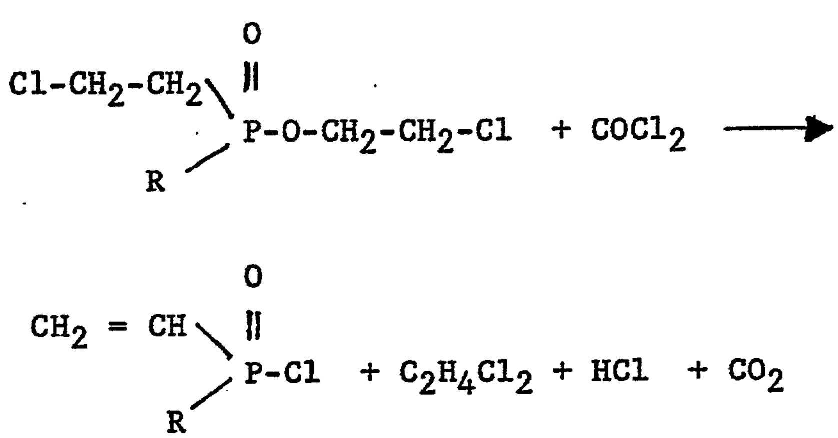

R = Methyl, Phenyl

Auch die entsprechend der DE-C 26 01 467 durch eine Arbusov-Reaktion erhältlichen (Meth)allylphosphinsäurealkylester und Crotylphosphinsäurealkylester lassen sich mit Phosgen in die entsprechenden Phosphinsäurechloride überführen.

Weiterhin ist bekannt, daß durch thermische Umlagerung von Phosphonigsäurealkylestern und anschließende Umsetzung mit Phosphorpentachlorid die entsprechenden Allylphosphinsäurechloride gemäß dem folgenden Reaktionsschema dargestellt werden können. [A.I. Pudovik et al in: Z. obsc. chim. 37(3), 700 (1967)].

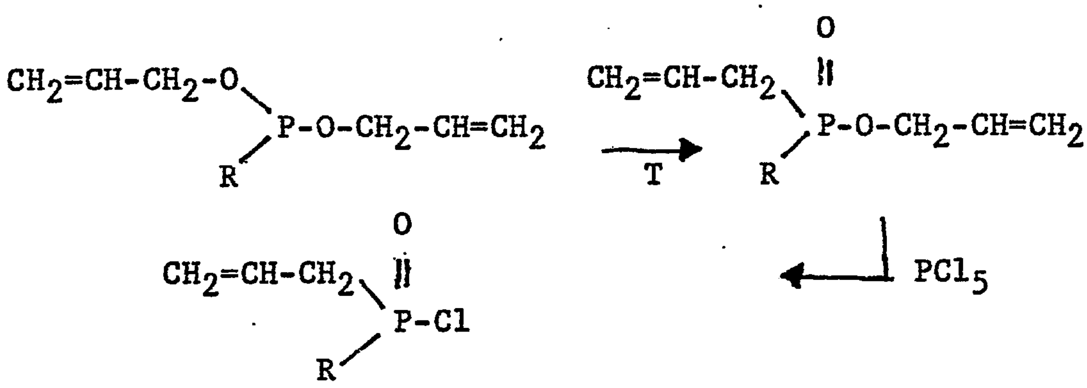


Die Erfindung wird durch die folgenden Beispiele erläutert.

Beispiel 1

100 g (0,8 mol) Methyl-vinyl-phosphinsäurechlorid wurden in 100 ml Acetonitril gelöst. Unter lebhaftem Rühren wurden dazu portionsweise 52,2 g (0,8 mol) Natriumcyanat gegeben. Die Temperatur wurde durch Kühlung bei maximal ca. 40° C gehalten. Das Produkt wurde nach 24-stündigem Rühren abgesaugt und mit Acetonitril nachgewaschen. Das Filtrat wurde im Vakuum eingeengt. Der dabei entstandene Rückstand wurde bei einer Temperatur von 58 - 60° C und einem Druck von 52,6 Pa destilliert. Man erhielt 88 g (= 83,5 % d. Th.) Methyl-vinyl-phosphinsäureisocyanat.

| $C_4H_6NO_2P$ (131) | | | | |
|---|---|---|---|---|
| Ber.: | 36,6% C | 4,6% H | 10,7% N | 23,7% P |
| Gef.: | 35,9% C | 4,6% H | 10,3% N | 24,0% P |

Beispiel 2

50 g (0,35 mol) Methyl-vinyl-thiophosphinsäurechlorid wurden in 80 ml Acetonitril gelöst. Unter lebhaftem Rühren wurden dazu portionsweise 27,1 g (0,35 mol) Ammoniumthiocyanat gegeben. Durch leichte Kühlung wurde die Temperatur bei ca. 30° C gehalten. Nach 3 Tagen Rühren wurde das Produkt abgesaugt und mit Acetonitril nachgewaschen. Das Filtrat wurde im Vakuum eingeengt. Der dabei entstandene Rückstand wurde bei einer Temperatur von 69-70° C und einem Druck von 1,33 Pa destilliert. Man erhielt 45 g (= 78 % d. Th.) Methyl-vinyl-thiophosphinsäureisothiocyanat.

| $C_4H_6NPS_2$ (163) | | | | | |
|---|---|---|---|---|---|
| Ber.: | 29,5% C | 3,7% H | 8,6% N | 19,0% P | 39,3% S |
| Gef.: | 29,5% C | 3,7% H | 8,4% N | 20,2% P | 39,4% S |

Beispiel 3

100 g (0,8 mol) Methyl-vinyl-phosphinsäurechlorid wurden in 160 ml Acetonitril gelöst. Unter lebhaftem Rühren wurden dazu portionsweise 61 g (0,8 mol) Ammoniumthiocyanat gegeben. Durch leichte Kühlung wurde die Temperatur bei maximal 30° C gehalten. Nach 3 Tagen Rühren wurde das Produkt abgesaugt und mit Acetonitril nachgewaschen. Das Filtrat wurde im Vakuum eingeengt. Der dabei entstandene Rückstand wurde bei einer Temperatur von 70° C und einem Druck von 6,7 Pa destilliert. Man erhielt 65 g (= 55,1 % d. Th.) Methyl-vinyl-phosphinsäureisothiocyanat.

| $C_4H_6NOPS$ (147) | | | | | |
|---|---|---|---|---|---|
| Ber.: | 32,6% C | 4,1% H | 9,5% N | 21,2% P | 21,8% S |
| Gef.: | 32,4% C | 4,1% H | 9,3% N | 21,2% P | 21,9% S |

Beispiel 4

a) Allyl-methyl-phosphinsäurechlorid

120 g (0,81 mol) Allyl-methyl-phosphinsäureethylester wurden in 100 ml Dichlormethan gelöst, und unter Kühlung wurde bei einer Temperatur von 10-15°C innerhalb von 2,5 Stunden Phosgen eingeleitet. Es wurde noch eine Stunde bei 25° C nachgerührt, und anschließend wurden die leichtflüchtigen Bestandteile unter vermindertem Druck abdestilliert. Der Rückstand wurde bei einer Temperatur von 62-66° C und einem Druck von 130 Pa destilliert. Man erhielt 102 g (= 91 % d. Th.) Allyl-methyl-phosphinsäurechlorid.

| $C_4H_8ClOP$ (138) | | | |
|---|---|---|---|
| Ber.: | 34,7% C | 5,8% H | 22,4% P |
| Gef.: | 34,9% C | 5,8% H | 22,7% P |

b) Allyl-methyl-phosphinsäureisocyanat

166 g (1,2 mol) Allyl-methyl-phosphinsäurechlorid wurden in 300 ml Acetonitril gelöst und mit 78 g (1,2 mol) Natriumcyanat auf 50-55° C unter Rühren erwärmt. Nach 5,5 Stunden wurde das Produkt abgesaugt und mit Acetonitril gewaschen, das Filtrat eingeengt und der Rückstand bei einer Temperatur von 78-80° C und einem Druck von 25 Pa destilliert. Man erhielt 123 g (= 71 % d. Th.) Allyl-methyl-phosphinsäureisocyanat.

| $C_5H_8NO_2P$ (145) | | | | |
|---|---|---|---|---|
| Ber.: | 41,4% C | 5,6% H | 9,7% N | 21,4% P |
| Gef.: | 41,6% C | 5,7% H | 9,5% N | 21,0% P |

Beispiel 5

a) Crotyl-methyl-phosphinsäurechlorid

200 g (1,23 mol) Crotyl-methyl-phosphinsäureethylester wurden in 150 ml Dichlormethan gelöst, und unter Kühlung wurde bei einer Temperatur von 12-15° C innerhalb von 3,5 Stunden Phosgen eingeleitet. Es wurde noch eine Stunde bei 25° C nachgerührt und anschließend destilliert. Man erhielt 182 g (= 97 % d. Th.) Crotyl-methyl-phosphinsäurechlorid vom Siedepunkt 83-85° C (260 Pa.).

| $C_5H_{10}ClOP$ (153) | | | |
|---|---|---|---|
| Ber.: | 39,4% C | 6,6% H | 20,3% P |
| Gef.: | 39,9% C | 6,5% H | 20,1% P |

b) Crotyl-methyl-phosphinsäureisocyanat

170 g (1,1 mol) Crotyl-methyl-phosphinsäurechlorid wurden in 300 ml Acetonitril gelöst und mit 73 g (1,1 mol) Natriumcyanat auf 55° C unter Rühren erwärmt. Nach 4,5 Stunden wurde das Produkt abgesaugt und mit Acetonitril gewaschen, das Filtrat eingeengt und der Rückstand bei einer Temperatur von 76-78° C und einem Druck von 27 Pa destilliert. Man erhielt 123 g (= 70 % d. Th.) Crotyl-methyl-phosphinsäureisocyanat.

| $C_6H_{10}NO_2P$ (159) | | | | |
|---|---|---|---|---|
| Ber.: | 45,3% C | 6,3% H | 8,8% N | 19,5% P |
| Gef.: | 45,0% C | 6,2% H | 8,6% N | 19,4% P |

Beispiel 6

a) β-Methallyl-methyl-phosphinsäurechlorid

140 g (0,86 mol) β-Methallyl-methyl-phosphinsäureethylester wurden in 120 ml Dichlormethan gelöst, und innerhalb von 3 Stunden wurde bei einer Temperatur von 15-20° C Phosgen eingeleitet. Es wurde noch 2 Stunden bei 25° C nachgerührt und anschließend destilliert. Man erhielt 127 g (= 97 % d.Th.) β-Methallyl-methyl-phosphinsäurechlorid vom Siedepunkt 66-68° C (27 Pa).

| $C_5H_{10}ClOP$ (153) | | | |
|---|---|---|---|
| Ber.: | 39,4% C | 6,6% H | 20,3% P |
| Gef.: | 39,8% C | 6,8% H | 20,6% P |

b) β-Methallyl-methyl-phosphinsäureisocyanat

127 g (0,83 mol) β-Methallyl-methyl-phosphinsäurechlorid wurden in 200 ml Acetonitril gelöst und zusammen mit 54 g (0,83 mol) Natriumcyanat unter Rühren auf 50-55° C erwärmt. Nach 5 Stunden wurde das Produkt abgesaugt und mit Acetonitril gewaschen, das Filtrat eingeengt und bei einer Temperatur von 70-75° C und einem Druck von 13 Pa destilliert. Man erhielt 115 g (= 87 % d. Th.) β-Methallyl-methyl-phosphinsäureisocyanat.

| $C_6H_{10}NO_2P$ (159) | | | | |
|---|---|---|---|---|
| Ber.: | 45,3% C | 6,3% H | 8,8% N | 19,5% P |
| Gef.: | 45,2% C | 6,4% H | 8,6% N | 18,9% P |

Beispiel 7

106 g (0,57 mol) Phenyl-vinyl-phosphinsäurechlorid wurden in 150 ml Acetonitril gelöst und mit 38 g (0,59 mol) Natriumcyanat bei einer Temperatur von 30°C gerührt. Nach 23 Stunden wurde das Produkt abgesaugt und mit Acetonitril gewaschen, das Filtrat eingeengt und der Rückstand bei einer Temperatur von 107-110°C und einem Druck von 33 Pa destilliert. Man erhielt 84 g (= 77 % d.Th) Phenyl-vinyl-phosphinsäureisocyanat.

| $C_9H_8NO_2P$ (193) | | | | |
|---|---|---|---|---|
| Ber.: | 56,0% C | 4,2% H | 7,3% N | 16,0% P |
| Gef.: | 54,9% C | 4,0% H | 7,1% N | 16,0% P |

Beispiel 8

83 g (0,55 mol) β-Methallyl-methyl-phosphinsäurechlorid wurden in 200 ml Acetonitril mit 42 g (0,55 mol) Ammoniumthiocyanat unter leichter Kühlung versetzt und anschließend bei einer Temperatur von ca. 30° C gerührt. Nach 3 Tagen wurde vom Niederschlag abgesaugt und dieser mit etwas Acetonitril gewaschen, das Filtrat eingeengt und destilliert. Man erhielt 72 g (= 75 % d. Th.) ß-Methallyl-methyl-phosphinsäureisothiocyanat vom Siedepunkt 98-100° C (66 Pa).

| $C_6H_{10}NOPS$ (175) | | | | | |
|---|---|---|---|---|---|
| Ber.: | 41,1% C | 5,8% H | 8,0% N | 17,7% P | 18,3% S |
| Gef.: | 41,0% C | 5,6% H | 8,6% N | 17,4% P | 18,0% S |

Beispiel 9

61 g (0,33 mol) Phenyl-vinyl-phosphinsäurechlorid wurden in 150 ml Acetonitril mit 25 g (0,33 mol) Ammoniumthiocyanat unter leichter Kühlung versetzt und anschließend 40 Stunden bei einer Temperatur von 30° C gerührt. Das gebildete Salz wurde abgesaugt und mit etwas Acetonitril gewaschen, das Filtrat eingeengt und destilliert. Man erhielt 54 g (= 80 % d. Th.) Phenyl-vinyl-phosphinsäureisothiocyanat vom Siedepunkt 130-132° C (66 Pa).

| $C_9H_8NOPS$ (209) | | | | | |
|---|---|---|---|---|---|
| Ber.: | 51,7% C | 3,9% H | 6,7% N | 14,8% P | 15,3% S |
| Gef.: | 51,8% C | 3,8% H | 7,2% N | 14,4% P | 15,8% S |

## Patentansprüche

1. Verbindungen der allgemeinen Formel I

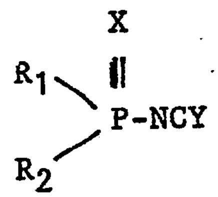

(I)

worin
X und Ygleich oder verschieden sind und Sauerstoff oder Schwefel bedeuten,
$R_1$ ein ethylenisch ungesättigter aliphatischer Rest mit 2 bis 6 C-Atomen und
$R_2$ ein gesättigter aliphatischer Rest mit 1 bis 6 C-Atomen oder ein Arylrest mit 6 bis 10 C-Atomen
ist.

2. Verbindungen nach Anspruch 1, dadurch gekennzeichnet, daß $R_1$ ein ethylenisch ungesättigter aliphatischer Rest mit 2 bis 4 C-Atomen ist.

3. Verbindungen nach Anspruch 1 oder 2, dadurch gekennzeichnet, daß $R_2$ ein gesättigter aliphatischer Rest mit 1 bis 2 C-Atomen ist.

4. Verbindungen nach Anspruch 1 oder 2, dadurch gekennzeichnet, daß $R_2$ ein gegebenenfalls substituierter Phenylrest ist.

5. Verbindungen nach Anspruch 1, dadurch gekennzeichnet, daß
$R_1$ eine Vinylgruppe,
$R_2$ ein Methyl-, Ethyl- oder ein unsubstituierter Phenylrest ist und
X und Y Sauerstoffatome
sind.

6. Verfahren zur Herstellung von Phosphinsäure- oder Thiophosphinsäureisocyanaten bzw. -isothiocyanaten der Formel I

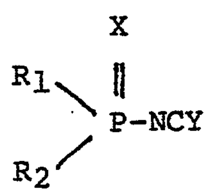

(I)

dadurch gekennzeichnet, daß man Phosphinsäure- oder Thiophosphinsäurechloride der Formel II

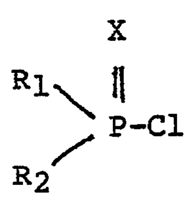

(II)

worin
X Sauerstoff oder Schwefel bedeutet,
und die übrigen Symbole die in Anspruch 1 angegebene Bedeutung haben, mit anorganischen Cyanaten bzw. Thiocyanaten umsetzt.

7. Verfahren nach Anspruch 6, dadurch gekennzeichnet, daß die Umsetzung mit Alkali-, Ammonium- oder Erdalkalicyanaten bzw. -thiocyanaten durchgeführt wird.

8. Verfahren nach Anspruch 6 oder 7, dadurch gekennzeichnet, daß die Umsetzung bei einer Temperatur von 10 bis 100° C und unter Feuchtigkeitsausschluß durchgeführt wird.

9. Verfahren nach einem der Ansprüche 6 bis 8, dadurch gekennzeichnet, daß die Umsetzung in einem Lösemittel durchgeführt wird.
10. Verfahren nach Anspruch 9, dadurch gekennzeichnet, daß als Lösemittel Acetonitril eingesetzt wird.

**Claims**

1. Compounds of the general formula I

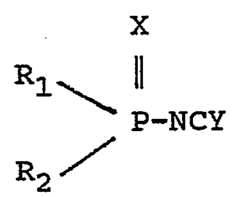

(I)

in which
X and Y are the same or different and denote oxygen or sulfur,
$R_1$ is an ethylenically unsaturated aliphatic radical containing from 2 to 6 carbon atoms and
$R_2$ is a saturated aliphatic radical containing from 1 to 6 carbon atoms or an aryl radical containing from 6 to 10 carbon atoms.
2. Compounds as claimed in claim 1, wherein $R_1$ is an ethylenically unsaturated aliphatic radical containing from 2 to 4 carbon atoms.
3. Compounds as claimed in claim 1 or 2, wherein $R_2$ is a saturated aliphatic radical containing 1 or 2 carbon atoms.
4. Compounds as claimed in claim 1 or 2, wherein $R_2$ is an unsubstituted or substituted phenyl radical.
5. Compounds as claimed in claim 1, wherein
$R_1$ is a vinyl- group,
$R_2$ is a methyl or ethyl radical or an unsubstituted phenyl radical and
X and Y are oxygen atoms.
6. Process for the preparation of phosphinic acid or thiophosphinic acid isocyanates or isothiocyanates of formula I

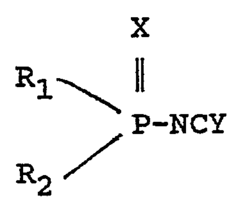

(I)

wherein phosphinic acid chlorides or thiophosphinic acid chlorides of formula II

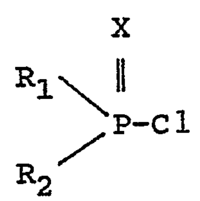

(II)

in which
X denotes oxygen or sulfur and the other symbols have the signification indicated in claim 1 are reacted with inorganic cyanates or thiocyanates.
7. A process as claimed in claim 6, wherein the reaction is run with alkali metal, ammonium or alkaline earth metal cyanates or thiocyanates.
8. A process as claimed in claim 6 or 7, wherein the reaction is run at a temperature from 10 to 100°C and in the absence of moisture.
9. A process as claimed in any of claims 6 to 8, wherein the reaction is run in a solvent.
10. A process as claimed in claim 9, wherein acetonitrile is used as the solvent.

**Revendications**

1. Composés de formule générale I

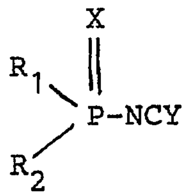

(I)

dans laquelle
X et Y sont identiques ou différents, et représentent des atomes d'oxygène ou de soufre,
$R_1$ est un radical aliphatique à insaturation éthylénique, ayant de 2 à 6 atomes de carbone, et
$R_2$ est un radical aliphatique saturé ayant de 1 à 6 atomes de carbone, ou un radical aryle ayant de 6 à 10 atomes de carbone.

2. Composés selon la revendication 1, caractérisés en ce que $R_1$ est un radical aliphatique à insaturation éthylénique ayant de 2 à 4 atomes de carbone.

3. Composés selon la revendication 1 ou 2, caractérisés en ce que $R_2$ est un radical aliphatique saturé ayant 1 ou 2 atomes de carbone.

4. Composés selon la revendication 1 ou 2, caractérisés en ce que $R_2$ est un radical phényle éventuellement substitué.

5. Composés selon la revendication 1, caractérisés en ce que
$R_1$ est le groupe vinyle,
$R_2$ est le groupe méthyle ou éthyle ou le radical phényle non substitué, et
X et Y sont des atomes d'oxygène.

6. Procédé pour la préparation de phosphinyl- ou thiophosphinylisocyanates ou -isothiocyanates de formule I

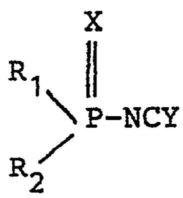

(I)

caractérisé en ce que l'on fait réagir des chlorures de phosphinyle ou thiophosphinyle de formule II

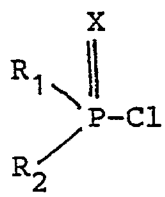

(II)

dans laquelle
X représente un atome d'oxygène ou de soufre et les autres symboles ont les significations données dans la revendication 1, avec des cyanates ou thiocyanates inorganiques.

7. Procédé selon la revendication 6, caractérisé en ce que la réaction, est effectuée avec des cyanates ou thiocyanates de métaux alcalins ou alcalino-terreux ou d'ammonium.

8. Procédé selon la revendication 6 ou 7, caractérisé en ce que la réaction est effectuée à une température de 10 à 100°C et à l'abri de l'humidité.

9. Procédé selon l'une des revendications 6 à 8, caractérisé en ce que la réaction est effectuée dans un solvant.

10. Procédé selon la revendication 9, caractérisé en ce que l'on utilise en tant que solvant l'acétonitrile.